# NEW EUROPEAN PATENT SPECIFICATION

(11) **EP 0 645 348 B2**
(45) Date of publication and mention of the opposition decision: **15.01.2003**
(45) Mention of the grant of the patent: 26.06.1996
(21) Application number: 93115683.0
(22) Date of filing: 29.09.1993
(51) Int. Cl.: C03C 3/078

(54) **Optical glass**
Optisches Glas
Verre optique

(43) Date of publication of application: 29.03.1995
(73) Proprietor: KABUSHIKI KAISHA OHARA, Kanagawa-ken (JP)
(72) Inventor: Senoo, Tatsuya, Sagamihara-shi, Kanagawa-ken (JP); Yamaguchi, Katsuhiko, Sagamihara-shi, Kanagawa-ken (JP); Nakahara, Muneo, Sagamihara-shi, Kanagawa-ken (JP)
(74) Representative: Jönsson, Hans-Peter, Dr.Dipl.-Chem.

(56) References cited:
- EP-B- 0 151 346
- DE-A- 4 402 537
- FR-A- 1 175 044
- FR-A- 2 320 031
- GB-A- 2 121 783
- US-A- 2 554 952

## Description

This invention relates to an optical glass of a SiO₂ - TiO₂ - K₂O - RO (where R represents Mg, Ca, Sr, Ba and Zn metal elements) system which is free of PbO, has an excellent property against devitrification and has optical constants of a refractive index (Nd) of about 1.58 - 1.75 and Abbe number (v d) of about 28 - 45.

As a glass having the above mentioned optical constants, there is known a silicate glass containing PbO. For coping with environmental problems arising in the process of manufacturing a glass, however, various glasses which do not contain a toxic PbO ingredient but instead contain a TiO₂ ingredient have been proposed. For example, the specification of German Patent No. 973350 discloses a silicate glass containing TiO₂ and fluorine and the specification of Japanese Laid Open Patent Publication No. Sho 54-105119 discloses a SiO₂ - TiO₂ - K₂O - BPO₄ and/or Al(PO₃)₃ system glass. These glasses, however, are insufficient in stability against devitrification. Besides, the former glass is hard to homogenize in melting due to evaporation of the fluorine ingredient. The specification of USP 4,812,423 discloses a glass of a SiO₂ - TiO₂ - Li₂O - K₂O system.

This glass, however, is also insufficient in stability against devitrification.

US-A-2 554 952 describes a titania-containing silicate glass having a high refractive index (1.57 to 1.65), with a composition based on soda-lime-silica glass ( 73 % SiO₂, 17 % Na₂O, 8 % CaO and 2 % minor ingredients) of which at least 10 % and up to 30 % of the SiO₂ is replaced by TiO₂ for increasing the refractive index, part of (up to 12 %) of the Na₂O is replaced by K₂O for color improvement and parts of the CaO are replaced by BaO and MgO for color improvement.

FR-A-23 20 031 describes an optical glass having a refractive index of 1.65 to 1.75 and Abbe numbers of 26.6 to 33.7 consisting of 36 to 47 % SiO₂, 3 to 17 % K₂O, 0 to 14 % Na₂O, 0 to 2 % Li₂O, 6 to 14 % RO (CaO, BaO, SrO), 20 to 30 % TiO₂ and as optional components ZrO₂ (0 to 3.5 %) and Nb₂O₅ (0 to 2.5 %).

It is, therefore, an object of the invention to comprehensively improve the disadvantages of the prior art optical glasses and provide an optical glass having the above mentioned optical constants and having an improved property against devitrification.

Accumulated studies and experiments made by the inventors of the present invention for achieving the above described object of the invention have resulted in a finding, which has led to the present invention, that a desired glass which, while maintaining the above mentioned optical constants, is remarkably improved in the property against devitrification and can be manufactured in a mass scale can be obtained in a novel SiO₂ - TiO₂ - K₂ O - RO system glass of a specific content range.

The optical glass achieving the above described object of the invention is characterized in that the optical glass consists of in weight percent:

| | |
|---|---|
| SiO₂ | 48 to 65 % |
| TiO₂ | 21 to 30 % |
| Na₂O + K₂O | 10 to 30 % |
| in which Na₂O | 0 to 25 % |
| K₂O | 5 to 30 % |
| MgO + CaO +SrO + BaO + ZnO | 2 to 15 % |
| in which MgO + CaO | 0 to 4 % |
| and in which MgO | 0 to 4 % |
| CaO | 0 to 4 % |
| SrO | 0 to 10 % |
| BaO | 0 to 15 % |
| ZnO | 0 to 10 % |
| Nb₂O₅ | 0 to 2 % |
| Sb₂O₃ | 0 to 1 % |

and having a refractive index (Nd) of 1.58 - 1.75 an Abbe number ( v d) of 28 - 45 and a light transmissivity of 80% in a specimen of glass having two polished surfaces and thickness of 10 mm in the range of 380 to 395 nm.

### Detailed Description of the Invention

In the optical glass made according to the invention, the above described content ranges of the respective ingredients have been selected for the reasons stated below. In the following description the content range of the respective ingredients are expressed in weight percent.

The SiO₂ ingredient is useful as a glass forming oxide. If the amount of this ingredient is below 46%, light transmissivity and chemical durability of the glass are deteriorated. If the amount exceeds 65% difficulty arises in melting of the glass. The TiO₂ ingredient is effective for imparting the glass with a high dispersion property. If the amount is below 21%, the refractive index drops and dispersion is reduced. If the amount exceeds 30%, light transmissivity and stability of the glass are deteriorated. For improving the melting property of the glass, the Na₂O ingredient may be added up to 25% which is the limit at which deterioration of chemical durability can be prevented. The K₂O ingredient is an important ingredient because it is effective for improving the melting property and stability of the glass. If the amount is below 5%, a sufficient effect cannot be obtained. If the amount exceeds 30%, chemical durability of the glass is deteriorated total amount of Na₂ O and K ₂O should be within a range of 10 - 30% for maintaining the melting property and stability of the glass.

The MgO, CaO, SrO, BaO and ZnO ingredients are important for maintaining the above mentioned optical constants and improving the melting property, stability and light transmissivity of the glass and one or more of these ingredients should be added to the glass. For achieving these properties, it will suffice if the respective ingredients are added up to 4%, 4%, 10%, 15% and 10%, respectively. If, however, the total amount of MgO and CaO exceeds 4%, light transmissivity is deteriorated. For achieving the desired effects, it is necessary to add one or more of MgO, CaO, SrO BaO and ZnO in the total amount of 2% or over. If, however, the total amount of these ingredients exceeds 15%, dispersion of the glass is reduced with resulting difficulty in maintaining the desired optical constants. The Nb₂O₅ ingredient may be added up to 2% for adjusting the optical constants of the glass.

Sb₂O₃ may also be added as a refining agent up to about 1%.

### Examples

Examples of the optical glass according to the invention will now be described.

Table 1 shows compositions of the examples (No.1 - No. 12) of the optical glass made according to the invention and compositions of comparative examples of the prior art glasses (No. A, No. B and No. C) as well as results of measurement of refractive index (Nd), Abbe number ( ν d) and temperature in liquid phase ( °C) of these glasses.

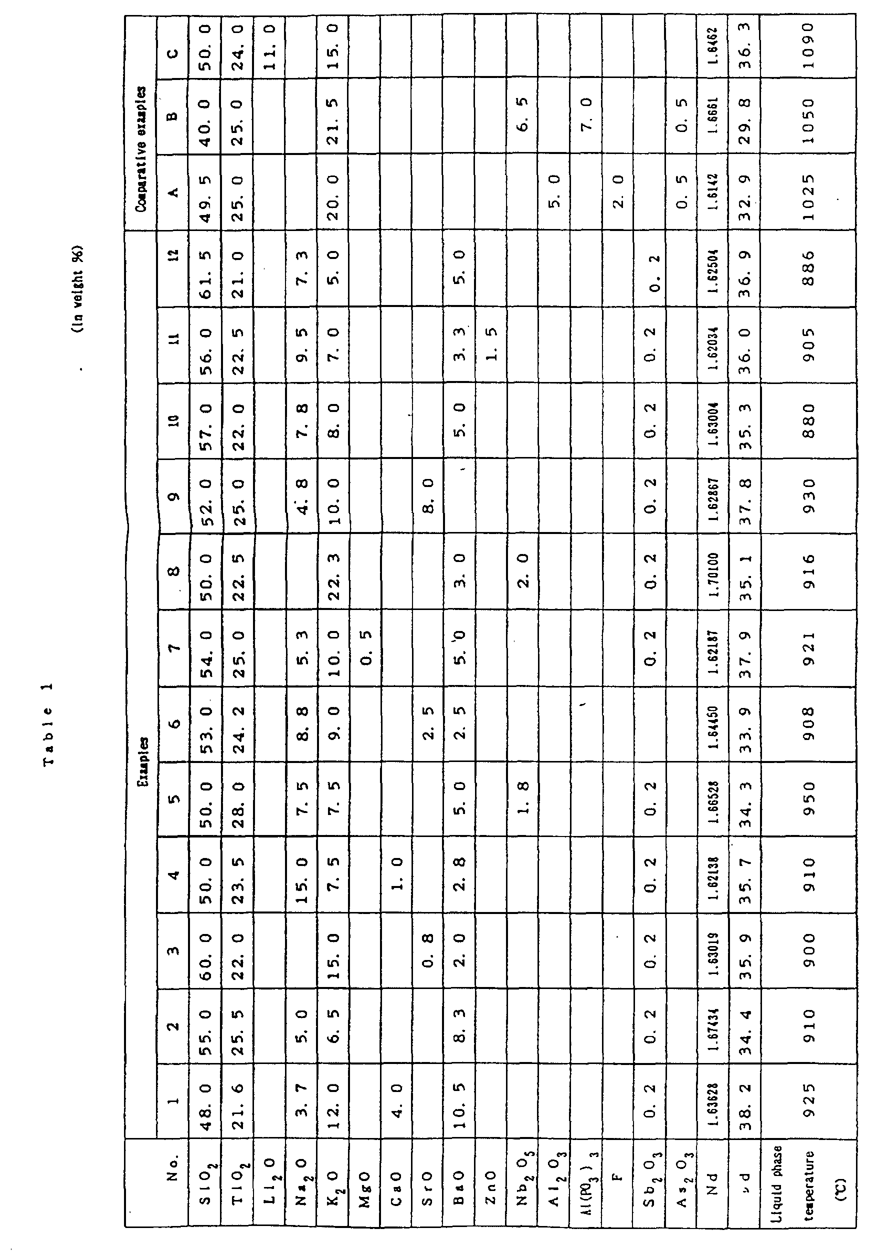

These glasses were obtained by preparing and mixing normal raw materials used for manufacturing optical glasses and melting the mixture of the raw materials in a platinum crucible, stirring the mixture to homogenize it, casting it in a mold to form a block of glass and annealing the block of glass.

The liquid phase temperature shown in Table 1 was obtained by crushing the glass obtained by the above described process, placing the crushed glass on a platinum plate and holding it in a temperature gradient furnace for 30 minutes and microscopically observing the state of devitrification.

As shown in Table 1, the glasses Nos. A, B and C exhibit high liquid phase temperatures whereas the glasses of the present invention exhibit low liquid phase temperature, indicating an improved property against devitrification and thereby indicating that the object of the invention has been achieved.

Measurement was made about wavelengths (T₈₀) which gives light transmissivity of 80% in a specimen of each glass having two polished surfaces and thickness of 10 mm. Results of the measurement show that T ₈₀of the glasses Nos. A and B of the Comparative Examples is 405 - 415 nm whereas T₈₀ of the glasses of the present invention is 380 - 395 nm which is shifted to the short wavelength side from the Comparative Examples, indicating that the glasses of the present invention are superior in light transmissivity to Nos. A and B of the Comparative Examples. As to No. C of the Comparative Examples, values of T₈₀ of the glasses of the present invention are substantially the same as values of T₈₀ of No. C.

The glasses of the present invention are excellent in their melting property, easy to homogenize and have good chemical durability.

## Claims

1. An optical glass consisting of in weight percent:
| | |
|---|---|
| SiO₂ | 48 to 65 % |
| TiO₂ | 21 to 30 % |
| Na₂O + K₂O | 10 to 30 % |
| in which Na₂O | 0 to 25 % |
| K₂O | 5 to 30 % |
| MgO + CaO + SrO + BaO + ZnO | 2 to 15 % |
| in which MgO + CaO | 0 to 4 % |
| and in which MgO | 0 to 4 % |
| CaO | 0 to 4 % |
| SrO | 0 to 10 % |
| BaO | 0 to 15 % |
| ZnO | 0 to 10 % |
| Nb₂O₅ | 0 to 2 % |
| Sb₂O₃ | 0 to 1 % |
and having a refractive index (Nd) of 1.58 to 1.75, an Abbé number (ν d) of 28 to 45 **and a light transmissivity of 80 % in a specimen of glass having two polished surfaces and thickness of 10 mm in the range of 380 to 395 nm.**

## Patentansprüche

1. Optisches Glas, das in Gew.-% besteht aus:
| | |
|---|---|
| SiO₂ | 48-65 % |
| TiO₂ | 21-30 % |
| Na₂O + K₂O | 10-30 %, wobei |
| Na₂O | 0-25 % |
| K₂O | 5-30 % sind, |
| MgO + CaO + SrO + BaO + ZnO | 2-15 %, wobei |
| MgO + CaO | 0-4 % sind, und wobei |
| MgO | 0-4 % |
| CaO | 0-4 % |
| SrO | 0-10 % |
| BaO | 0-15 % |
| ZnO | 0-10 % sind, |
| Nb₂O₅ | 0-2 % |
| Sb₂O₃ | 0-1 %, |
und das einen Brechungsindex (Nd) von 1,58-1,75 und eine Abbésche Zahl (νd) von 28-45 und eine Lichtdurchlässigkeit von 80 % hat, in einer Glasprobe, die zwei polierte Oberflächen und eine Dicke von 10 mm im Bereich von 380 bis 395 nm aufweist.

## Revendications

1. Verre optique comprenant en pourcentage en poids :
| | |
|---|---|
| SiO₂ | 48 - 65 % |
| TiO₂ | 21 - 30 % |
| Na₂O + K₂O | 10 - 30 % |
| où Na₂O représente | 0 - 25 % |
| K₂O représente | 5 - 30 % |
| MgO + CaO + SrO + BaO + ZnO | 2- 15 % |
| où MgO + CaO représentent | 0 - 4 % |
| et où MgO représente | 0 - 4 % |
| CaO représente | 0 - 4 % |
| SrO représente | 0 - 10 % |
| BaO représente | 0 -15 % |
| ZnO représente | 0 -10 % |
| Nb₂O₅ | 0 - 2 % |
| Sb₂O₃ | 0 - 1 % |
et ayant un indice de réfraction (Nd) de 1,58 - 1,75 et un nombre d'Abbe (vd) de 28 - 45 et une transmissibilité de la lumière de 80 % dans un échantillon de verre ayant deux surfaces polies et une épaisseur de 10 mm dans un intervalle de 380 à 395 nm.
